# EUROPEAN PATENT APPLICATION

(11) **EP 1 845 450 A2**
(43) Date of publication of application: **17.10.2007**
(21) Application number: 06255133.8
(22) Date of filing: 04.10.2006
(51) Int. Cl.: G06F 11/20

(54) **Storage Controller**

(30) Priority: 11.04.2006 JP 2006108620
(71) Applicant: Hitachi, Ltd., Chiyoda-ku Tokyo (JP)
(72) Inventor: Kawakami, Norihiko Hitachi, Ltd., Int. Prop. Group, Chiyoda-ku Tokyo 100-8220 (JP); Nakajima, Akio Hitachi, Ltd., Int. Property Group, Chiyoda-ku Tokyo 100-8220 (JP)
(74) Representative: Hodsdon, Stephen James

(57) **Abstract**

Provided is a storage control unit (10) capable of, even when a failure occurs in access from a control unit (20, 30) to storage devices (DRVn) and the access from the control unit to the storage devices is switched to access via an alternate path, continuing I/O access to the storage devices without interrupting I/O requests from a host (70).

The present invention provides a storage control unit (10) having dual control units (20, 30) wherein a controller (23, 33) in one control unit, that has received an I/O request from a host, issues an I/O request to an initiator (25, 35) in another control unit using a control path (81) between the controllers in the control units, and the initiator that has received this I/O request accesses the target storage device(s) via a connection path based on that I/O request.

## Description

This application relates to and claims priority from Japanese Patent Application No. 2006-108620, filed on April 11, 2006, the entire disclosure of which is incorporated herein by reference.

The present invention relates to a storage control unit having redundant control units that access a common storage unit.

JP-A-2005-031928 discloses a mid-range class storage control unit having dual control units in one chassis, the control units accessing a common storage unit. In this storage control unit, a plurality of storage devices is arranged in an array within the chassis, and each control unit can access the storage unit via a connection path provided for each control unit.

Each control unit, upon receipt of an I/O request from a host, accesses the I/O request target storage device. Each control unit includes: an MPU that controls the overall control unit; cache storage; a port to which a host is connected; a disk controller as an initiator that executes the control for accessing, from among a plurality of storage devices (hard disk drives), the data I/O request target hard disk drive(s) via an access path under the control of the MPU; and a data controller that controls data exchanges between the MPU, the cache storage and the disk controller.

There are two routes for the control units to access storage devices based on I/O requests from a host: a route passing through the disk controller on the first control unit and a first connection path; and a route passing through the disk controller on the second control unit and a second connection path.

In this type of storage control unit, a plurality of hard disk drives is connected in a loop to a control unit using a Fibre Channel. Examples of connection methods using Fibre Channel loops include FC-AL (Fibre Channel-Arbitrated Loop). A control unit is connected in a loop to hard disk drives using the FC-AL. Because of the FC-AL standards, any occurrence of disconnection or failure in even a part of the FC-AL disables connection between the control unit and the hard disk drives, making the entire loop with the failure unusable.

Therefore, in order to deal with hard drive replacement, failures or the like, a port bypass circuit (PBC), which bypasses (isolates) a part of a loop, or hard disk drives, is provided.

In this storage control unit, the MPU in the first control unit receives an I/O request from a host via a host port, and issues an I/O request targeting hard disk drive(s) (HDD) to the initiator. The initiator accesses the target HDDs according to the request from the MPU, and issues an I/O command to, and data I/O processing on, the HDDs.

In this type of storage control unit, should a failure occur in a back-end side switch included in an FC-AL for one control unit, the following processing is conducted. When the first control unit receives data from a host port, the MPU receives an I/O request from the host, and issues an I/O request targeting HDDs to the initiator. The initiator, upon detecting a failure in a back-end switch, switches the path from the initiator to the HDDs from the normal path to a redundant path, making it possible to access the target HDDs according to the I/O request from the MPU not via the failed connection path on the first control unit side, but by connecting to an FC-AL switch on the second control unit side.

JP-A-2005-339216 discloses the control of PBC and ENC (enclosure), and JP-A-2005-182104 describes retry processing for failure detection.

Currently, when a failure occurs in a first connection path from a first initiator in a first control unit to HDDs and the first initiator accesses a second connection path via a second control unit upon switching the connection path to an alternate path as described above, the first initiator is not aware of the addresses for the switches on the second connection path's FC-AL. Therefore, the first initiator must obtain the addresses for the switches on the second FC-AL and initialize back-end switch configuration information. In the meantime, data transfer cannot be performed for the HDDs, and it is necessary to interrupt I/O requests from hosts.

Therefore, an object of the present invention is to provide a storage control unit capable of, even when a failure occurs in access from a control unit to storage devices and the access from the control unit to the storage devices is switched to access via an alternate path, continuing I/O access to the storage devices without interrupting I/O requests from a host.

In order to preferably achieve the above object, an aspect of the present invention provides a storage control unit having dual control units wherein a controller in one control unit, that has received an I/O request from a host, issues an I/O request to an initiator in another control unit using a control path between the controllers in the control units, and the initiator that has received this I/O request accesses the target storage device(s) via a connection path based on that I/O request.

Therefore, the present invention preferably does not require an initiator to reconfigure or initialize connection path information, even when I/O access from a host to storage device(s) is executed via an alternate path, and thus makes it possible to, even when access from a control unit to storage device(s) is switched to access via an alternate path, continue I/O access to the storage devices without interrupting I/O requests from a host.

More specifically, an aspect of the present invention provides a storage control unit including: a storage unit including a plurality of storage devices; a plurality of control units that perform data input/output processing for the storage unit in response to a data input/output request from a host system, each of the control units including a controller that performs the overall control of the data input/output processing, and an initiator that, based on the data input/output request, performs control to access a storage device, from among the storage devices in the storage unit, that is the target of the data input/output request; and a plurality of connection paths that each connect each of the control units and the storage unit, wherein the respective controllers in the plurality of control units are interconnected via a path that can send/receive control data therebetween; and wherein the controller in a control unit from among the plurality of control units, based on the data input/output request from the host to the storage unit, sends the data input/output request to another control unit, from among the control units, using the path, and the initiator in the other control unit accesses a target storage device from among the plurality of storage devices via its connection path. Preferably, upon occurrence of a failure in access from a control unit from among the plurality of control units to the storage unit, the control unit sends the data input/output request to another control unit from among the plurality of control units via the path. Storage unit access failures include a failure in a storage device itself, and failure in a switch or a port on a path connecting an initiator and a storage device.

As explained above, the aspects of the present invention may make it possible to provide a storage control unit capable of continuing I/O command processing without interrupting I/O access from a host during the time that a failure occurs in access to storage devices, and a control unit controlling data input/output between the host and the storage devices switches the access to access via an alternate route.

### BRIEF DESCRIPTION OF THE DRAWINGS

FIG. 1 is a block diagram showing the hardware configuration of a storage control unit (disk array).
FIG. 2 is a simplified hardware configuration diagram focussing on the main structure shown in FIG. 1.
FIG. 3 is a control table specifying addresses for ports on FC-ALs for hard disk drives (DRV0, 1, 2, ... n).
FIG. 4 is a path control table for an MPU in each control unit to access target HDDs.
FIG. 5 is a block diagram showing control information stored in local storage.
FIG. 6 is a flowchart showing processing for a failure occurring in access to HDDs.
FIG. 7 is a flowchart showing the processing for an I/O request from a host.
FIG. 8 is the first half of a timing chart for failure detection.
FIG. 9 is the second half of the timing chart for failure detection.

Embodiments of the present invention will be explained below with reference to the drawings. The embodiments described below do not limit the scope of the patent claims for the present invention, and any features described in the embodiments can be combined arbitrarily.

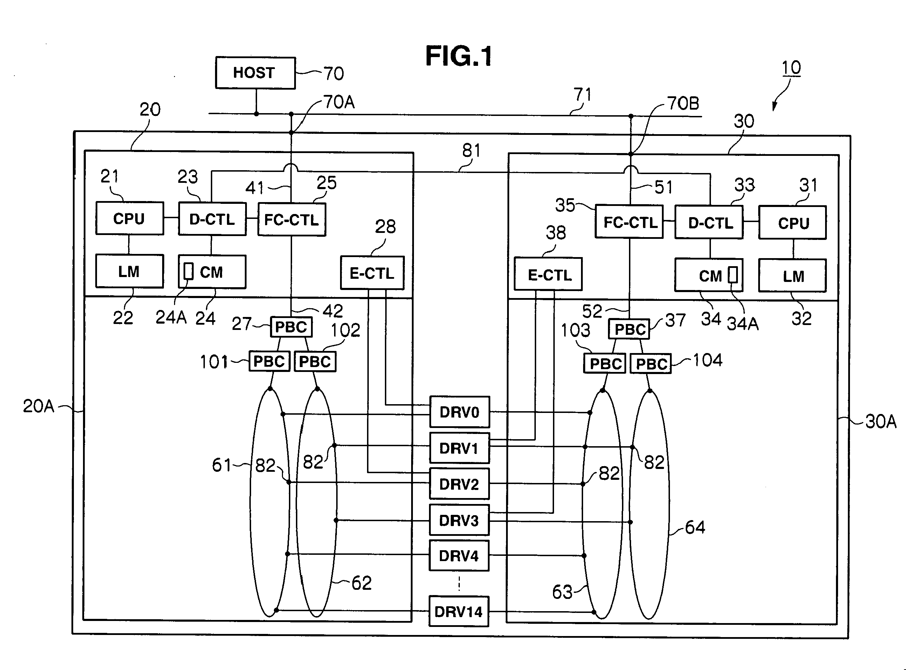

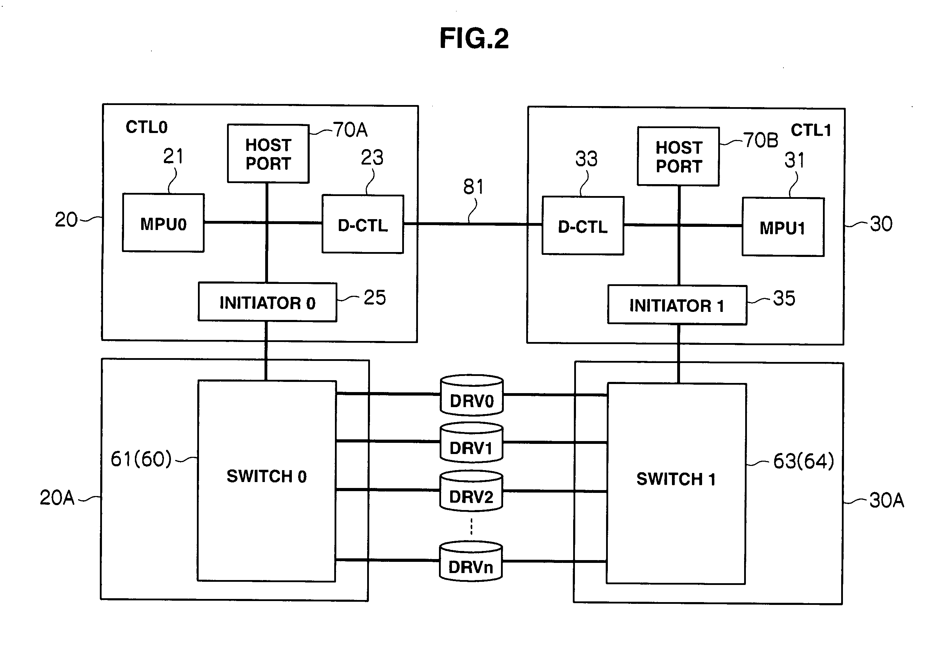

FIG. 1 shows the details of the hardware configuration of a storage control unit (disk array unit) 10. FIG. 2 shows a hardware configuration in a simple manner focussing on the main structure in FIG. 1. The disk array unit 10 is connected to a host (higher-level host) 70 via a communication network 71. The host 70 may be a server, personal computer, work station, or main frame, etc., and functions as a higher-level host for the disk array unit 10. For the communication network 71, for example, a LAN (Local Area Network), a SAN (Storage Area Network), the Internet, or a dedicated line, or something similar be used. 70A and 71 B show host ports with which a host is connected to the storage control unit.

In an open host, data is transferred according to a protocol such as TCP/IP (Transmission Control Protocol/Internet Protocol), FCP (Fibre Channel Protocol), iSCSI (internet Small Computer System Interface) protocol, for example. In a mainframe host, data is transferred according to a communication protocol such as FICON (Fibre Connection®), ESCON (Enterprise System Connection®), ACONARC (Advanced Connection Architecture®), FIBARC (Fibre Connection Architecture®), for example. A NAS (Network Attached Storage) function configured to accept data output requests designating a file name from the host 70 according to a protocol such as NFS (Network File System) may also be adopted.

The disk array unit 10 has a redundant control means by employing a dual control unit configuration including two control units 20 and 30. The control unit 20 mainly includes an MPU 21, local storage LM (system storage) 22, a data controller (D-CTL) 23, cache storage (CM) 24, a Fibre Channel Protocol controller (F-CTL) 25, and an enclosure controller (E-CTL) 28. Reference numeral 30 shows the other control unit, which has the same configuration as the control unit 20.

Reference numeral 20A is a connection unit, controlled by the control unit 20, that relays I/O from the host 70 to the target storage device. This connection unit includes FC-ALs (Fibre Channel Arbitrated Loops) 61 and 62, PBCs (Port Bypass Circuits) 27, 101, and 102. The PBCs and FC-ALs constitute connection paths. Reference numeral 30A shows a connection unit on the control unit 30 side, which has the same configuration in the connection unit 20A.

The MPU 21 is a processor that controls the processing for data input/output (write access or read access, etc.) to/from a plurality of disk drives DRV0 to DRV14 in response to data input/output requests from the host 70, and it controls the data controller 23, the Fibre Channel Protocol controller 25 and the PBC 27 by executing a microprogram stored in the local storage 22.

The data controller 23, controlled by the MPU 21, controls data transfer between the Fibre Channel Protocol controller 25 and the cache storage 24. The cache storage 24 temporarily stores data sent/received to/from a front interface or a back interface via the Fibre Channel Protocol controller 25.

The Fibre Channel Protocol controller 25, as an initiator to issue an I/O request to the FC-ALs as described later, has a function that interfaces the host 70 via a front interface connection Fibre Channel 41, and receives block access requests according to Fibre Channel protocol. Furthermore, the Fibre Channel Protocol controller 25 has functions that interface the disk drives DRV0 to DRV14 via a back interface connection Fibre Channel 42, and sends data input/output requests to the disk drives DRV0 to DRV14 according to a protocol specifying commands, etc, for controlling the disk drives DRV0 to DRV14.

The PBC 27 selects either or both of the two FC-ALs 61 and 62 as the connection destination for the back interface connection Fibre Channel 42, and performs connection switching.

The FC-AL 61 is connected in a loop to the even-numbered disk drives DRV0, DRV2 ... DRV14 via the respective PBCs 82 provided on the FC-AL 61. The FC-AL 62 is connected in a loop to the odd-numbered disk drives DRV1, DRV3 ... DRV13 via the respective PBCs 82 provided on the FC-AL 62.

The PBCs 82 are electronic switches to automatically open or close the FC-ALs 61 and 62 so that nodes can be added or deleted with a minimum of system operation errors. The PBCs 82 have a function that bypasses the Fibre Channel Protocol controller 25 and the disk drives DRV0 to DRV14 to electrically exclude them from the FC-AL 61 and 62.

For example, a PBC 82 can isolate a failed one of the disk drives DRV0 to DRV14 from the FC-ALs 61 and 62 to make communication between the remainder of the disk drives DRV0 to DRV14 and the Fibre Channel Protocol controller 25 possible. Also, the PBCs 82 make it possible to add or remove a disk drive to or from the disk drives DRV0 to DRV14 while maintaining the operation of the FC-ALs 61 and 62. For example, when a new disk drive DRV15 (not shown) is mounted, a PBC 82 has the disk drive DRV15 connected to the FC-ALs 61 and 62 to make communication between the disk drive DRV15 and the Fibre Channel Protocol controller 25 possible.

The enclosure controller (E-CTL) 28 controls SES (SCSI Enclosure Services) drives. Each SES drive has the SES (SCSI Enclosure Services) or ESI (Enclosure Services I/F) function set forth in the SCSI3 (Small Computer System Interface 3) standards, and can activate the SES (SCSI Enclosure Services) or ESI (Enclosure Services I/F) function. An SES drive is a disk drive that can communicate with the enclosure controller 28 in addition to the FC-ALs 61 to 64. Here, SES drives are used for the two disk drives for each FC-AL (DRVs 0 and 2 or DRVs 1 and 3), but all the disk drives DRV0 to DRV14 may be SES drives.

Meanwhile, the control unit 30, which has a same configuration to that of the control unit 20, includes an MPU 31, local storage (LM) 32, a data controller (D-CTL) 33, cache storage (CM) 34, a Fibre Channel Protocol controller (FC-CTL) 35, the enclosure controller (E-CTL) 38, the front interface connection Fibre Channel 51, the back interface connection Fibre Channel 52. The connection unit 30A, which has the same configuration as the connection unit 20A, includes PBCs 37, 103, and 104, and FC-ALs 63 and 64. The PBC 37 selects either or both of the two FC-ALs 63 and 64 as the connection destination for the back interface connection Fibre Channel 52, and performs connection switching.

The FC-AL 63 is connected in a loop to the even-numbered disk drives DRV0, DRV2... DRV14 via respective PBCs 82. The FC-AL 64 is connected in a loop to the odd numbered disk drives DRV1, DRV3 ... DRV13 via respective PBCs 82.

The data controller 23 and 33 are interconnected via a bus 81. Either data controller 23 (or 33) can transfer initiator control commands, I/O request data from a host, and cache data to the other data controller 33 (or 23) via the bus 81. For example, when both controllers 20 and 30 share access to an identical logical volume, write data or read data can be transferred between both controllers.

The control units 20 and 30 can control the disk drives DRV0, DRV1 ... DRV14 at a defined RAID level (e.g., 0, 1, 5, or 6). In other words, a plurality of disk drives constitute a RAID group, and even if a failure occurs in one disk drive, the data for the failed disk drive can be reproduced from the parity data stored in another disk drive.

With RAID, a plurality of disk drives DRV0, DRV1, ... DRV14 are managed as one group (hereinafter referred to as the "RAID group"). In the RAID group, logical volumes, which are units for access from the host 70, are defined. Each logical volume is provided with an identifier called a LUN (logical unit number).

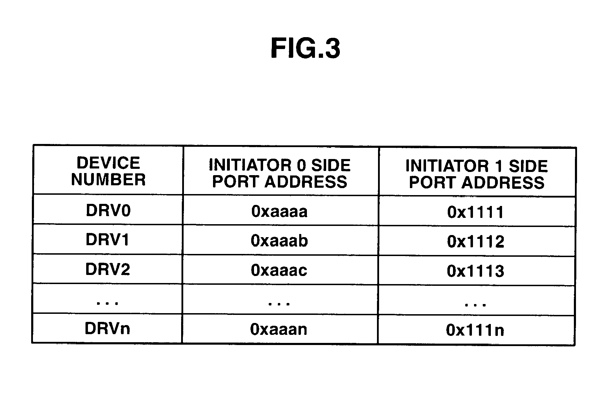

FIG. 3 shows a control table specifying addresses for ports on the FC-ALs for the hard disk drives (DRV0, 1, 2, ... n). For each storage device, the port address on the initiator 0 side FC-AL (61 or 62) (see FIG. 2) and the port address on the initiator 1 side FC-ALs (63 or 64) are shown associated with each other. This control table is set in the respective local memories 22 and 32 in the control units 20 and 30. The initiators 25 and 35 each determine the addresses for the I/O request target HDDs based on I/O requests, and execute processing for inputting/outputting data to/from the HDDs with the determined addresses with reference to the control table shown in FIG. 3.

A data I/O request from a host includes a logical block address for a logical volume where data is to be stored. The MPU 0 converts this logical block address into a port address on the initiator 0 side shown in FIG. 3 in order to actually access the HDDs, using the conversion table stored in the local storage (LM22 in FIG. 1). Meanwhile, the MPU 0 upon a failure occurring in the switch 0 circuit, converts the port address on the initiator 0 side to the port address on the redundant initiator 1 side based on the control table shown in FIG. 3. The MPU 0 provides the converted port address to the initiator 1. The initiator 1 accesses the target HDDs based on the converted address. The MPU 1 in the control unit on the CTL1 side may execute this conversion operation using the conversion table.

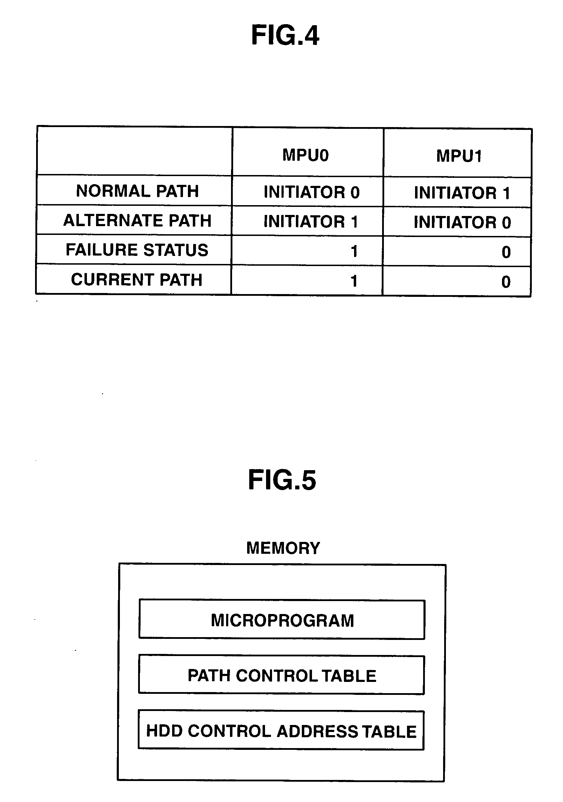

FIG. 4 shows a path control table for the MPU in each control unit to access the target HDDs. FIG. 4 shows that a normal path for the MPU 0 on the control unit 0 (CTL0) side is a route for accessing the HDDs via the initiator 0 (25), and its alternate path is a route for accessing the HDDs via the control path 81 and the FC-CTL 35 on the control unit 1 side. FIG. 4 also shows that a failure has occurred in the switch 0 in the control unit 0 side (failure status: a flag is set (F=1)) and access from the MPU 0 to the HDDs should be conducted via the alternate path (used path: a flag is set (F=1)).

Meanwhile, it shows that no failure has occurred in access from the MPU 1 to the HDDs (failure status: 0), and the MPU 1 accesses the HDDs through the normal path via the initiator 1 (35). The initiators 0 and 1 monitor whether any failure has occurred in access to the HDDs by executing a program described later, and if a failure occurs in any of the control units, updates the path control table in FIG. 4. The MPU 0 or 1 that has received an I/O request from a host determines the path for accessing the HDDs with reference to the path control table shown in FIG. 4.

FIG. 5 shows control information stored in the local storage 22 (32) shown in FIG. 1. The local storage stores a microprogram, the path control table shown in FIG. 4, and the HDD control address table shown in FIG. 3.

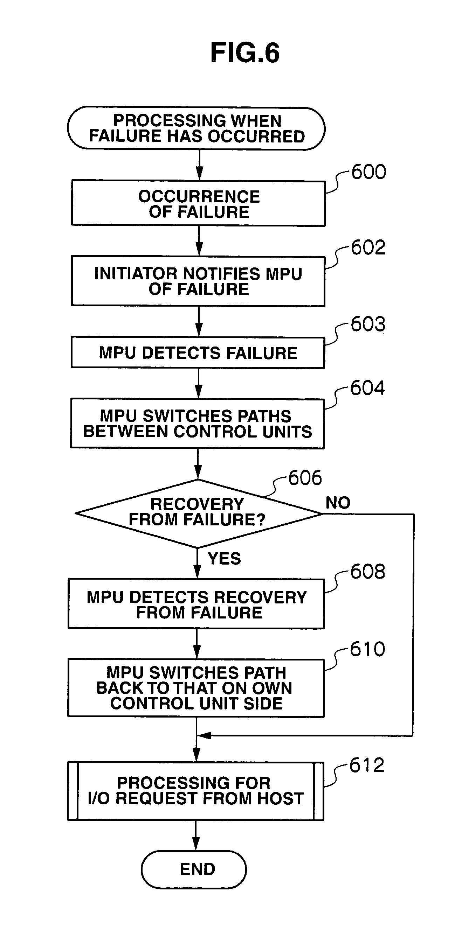

FIG. 6 shows a flowchart for the case where a failure occurs in access to the HDDs. Upon occurrence of a failure in an HDD (600), the initiator 25 (or 35) detects the failure and informs the MPU 21 (31) thereof (602). The failure judgment method will be described later. Next, the MPU 21 (or 31), upon detecting the failure, switches the path between the control units to the alternate path (604).

Next, the MPU 21 (31) judges whether or not the failure has been recovered from (606), and the MPU 21 (31), upon a negative judgment, processes the input/output request from the host via the alternate path (612). Meanwhile, the MPU21 (31), upon an affirmative judgment at step 606, detects the recovery from the failure and switches the path from the alternate path to the normal path (610).

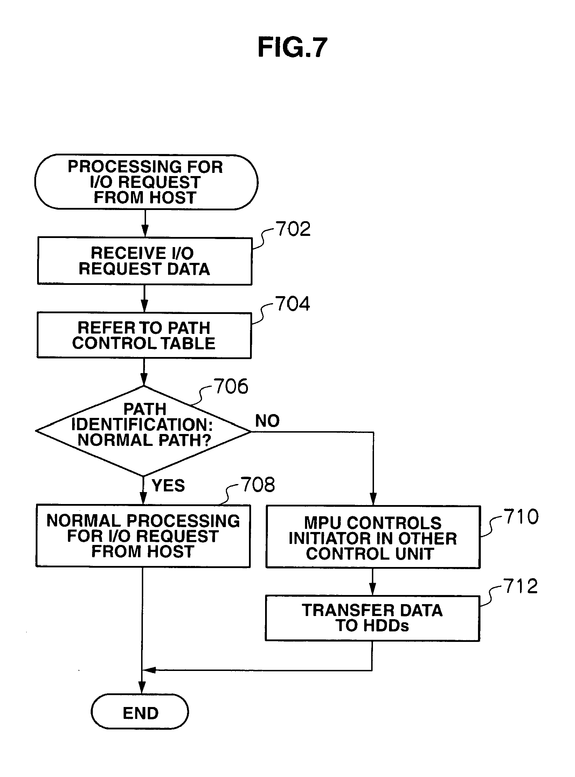

FIG. 7 shows a flowchart showing processing for an I/O request from a host. The MPU 21 (31), upon receipt of I/O request data from the host, judges whether to use the normal path or the alternate path as the path for issuing the I/O request to the HDDs, with reference to the path control table shown in FIG. 4 (704 and 706). If the normal path is to be used, the MPU 21 (31) sends the I/O request to the initiator via the normal path (708). Meanwhile, if the alternate path is to be used, the MPU 21 (31) makes the initiator in another control unit transfer data to the HDDs (710 and 712).

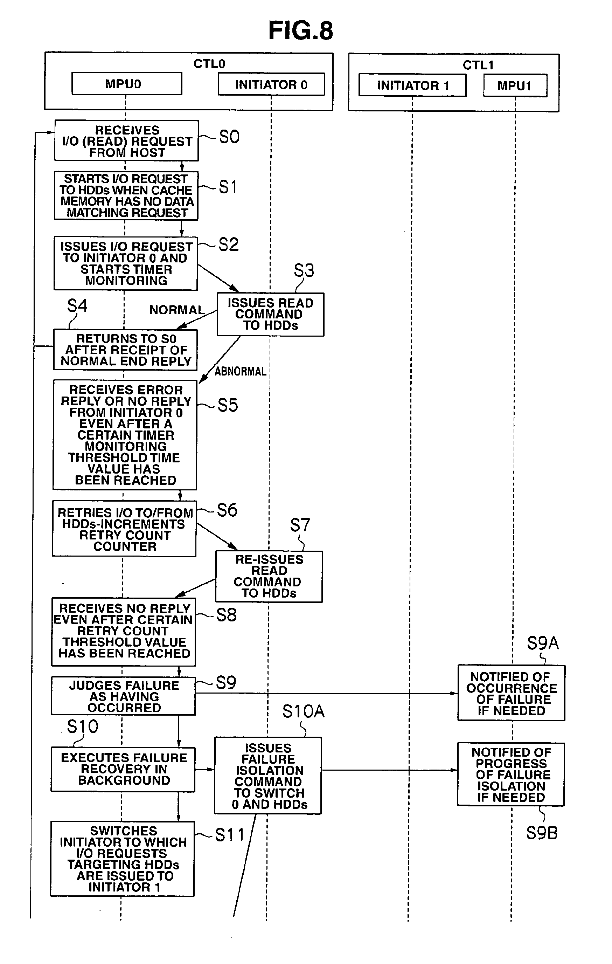

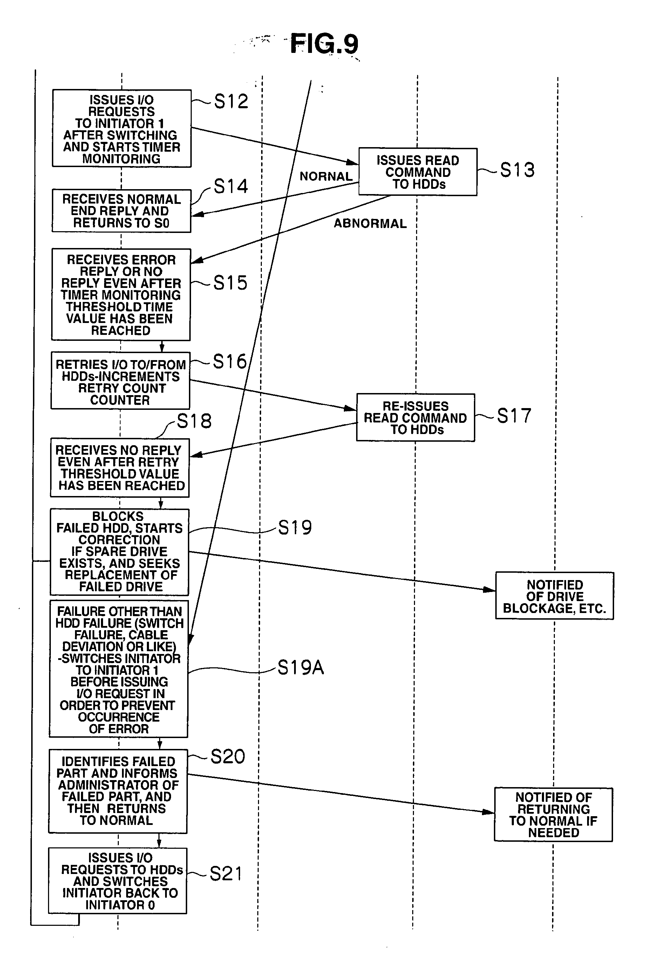

Next, failure detection executed by a control unit will be explained with reference to the timing chart shown in FIG. 8 and FIG. 9. The MPU 0 in the control unit 0 receives a read command from a host (S0). The MPU 0, if no data matching the read command is stored in the cache storage, starts the processing for making an output request to the HDDs (S1). Next, the MPU 0 issues an I/O (output) request to the initiator 0, and starts monitor processing using a timer (S2).

The initiator 0 issues a read command to the HDDs (S3). The initiator 0, when it has processed the read command normally, sends the read data to the MPU 0, and the MPU 0 returns the read data to the host, and then returns to the processing at S0 (S4). In the processing at S3, the initiator 0 sends an error reply to the MPU 0 if it cannot read the data. After the receipt of the error reply, or if it does not receive a reply from the initiator 0 within a threshold value (time) for timer monitoring (S5), the MPU 0 increments the I/O retry count counter for the HDDs (S6). The initiator 0 then re-issues a read command to the HDDs (S7).

If the initiator 0 is able to read out the target data from the target HDDs, the MPU 0 returns to S0. Meanwhile, if there is no reply from the initiator 0 even after a certain reply count threshold value has been reached (S8), the MPU 0 judges a failure as having occurred (S9). The MPU 0 executes processing for recovering from the failure in the background (S10). The MPU 0 switches the initiator, to which it issues I/O requests targeting the HDDs from a host, from the initiator 0 to the initiator 1 on the control unit 1 (CTL1) side (S11). At this time, the MPU 0 may issue all I/O requests to the initiator 1, and may also issue only I/O requests targeting storage devices subject to I/O errors to the initiator 1.

When the MPU 0 determines a failure as having occurred, it informs the MPU 1 of an HDD access failure having occurred (S9A). The initiator 0 issues a failure isolation command to the switch 0 or the HDDs (S10A), and notifies the MPU 1 of the progress of the failure isolation (S9B).

The initiator 0, after the issue of the failure isolation command, notifies the MPU 0 of any switch failure, cable deviation or the like, i.e., any I/O errors other than HDD failure. Before the host issues an I/O request, the MPU 0 switches the initiator, to which it issues I/O requests from the host, from the initiator 0 to the initiator 1 (S19A: FIG. 9).

At S11, the MPU 0 also switches the initiator, to which it issues I/O requests from the host, from the initiator 0 to the initiator 1. The MPU 0 issues an I/O request to the initiator 1 and simultaneously starts monitor processing using a timer (S12). The initiator 1 issues a read command to the HDDs (S13). When the initiator 1 has processed this command normally, the MPU 0 returns to S0 (S14). Meanwhile, if the initiator 1 cannot process the read command normally, the MPU 0, after receipt of an error reply from the initiator 1 or if there is no reply from the initiator 1 even after a threshold time value for a timer monitoring has been reached (S15), increments the I/O retry count counter for the HDDs (S16). Next, the initiator 1 re-issues the read command to the HDDs.

If the MPU 0 judges the retry count as exceeding the threshold value (S18), the initiators in both control units cannot access the target HDDs, and the MPU 0 judges a failure as having occurred in a target HDD, and blocks the failed HDD, and if there is a spare drive, performs correction copy of the data in the blocked drive to the spare drive. The MPU 0 gives a notice to an administrator, seeking replacement of the failed drive (S19).

The MPU 0 also identifies any failed part other than the HDDs, and informs the administrator thereof. The administrator replaces the failed part, removing the HDD access failure in CTL 0 (S20). Subsequently, the MPU 0 switches the initiator, to which it issues I/O requests targeting the HDDs, from the initiator 1 back to initiator 0 (S21). Even if the initiator to issue I/O to the HDDs is switched between the initiator 0 and the initiator 1 during a series of the above processes, there is no need to re-configure or reset HDD port address information for the initiators (FIG. 3), and thus the storage control unit does not need to interrupt I/O requests from hosts.

In the above-described embodiment, a controller in one control unit issues an I/O request from a host to an initiator in another control unit using an existing path provided between the controllers. However, the I/O request may be sent to the controller in the other control unit.

The aforementioned SES drives may monitor a switch circuit for any abnormality based on a back-end chassis monitor program. The MPU 0, triggered by a failure detection event, makes an inquiry the initiator about the part where the failure has occurred, and the initiator notifies the MPU 0 of the port information for the abnormal part in the switch circuit. The MPU0 executes block or correction processing as necessary. In the meantime, the MPU0 switches the initiator that issues I/O requests targeting HDDs from the initiator 0 to the initiator 1, and issues I/O requests to the initiator 1.

## Claims

1. A storage control unit comprising:
a storage unit including a plurality of storage devices;
a plurality of control units that perform data input/output processing for the storage unit in response to a data input/output request from a host, each of the control units including a controller that performs the overall control of the data input/output processing, and an initiator that, based on the data input/output request, performs control to access a storage device, from among the storage devices in the storage unit, that is the target of the data input/output request; and
a plurality of connection paths that each connect each of the control units and the storage unit,
wherein the respective controllers in the plurality of control units are interconnected via a path that can send/receive control data therebetween; and
wherein the controller in a control unit from among the plurality of control units, based on the data input/output request from the host to the storage unit, sends the data input/output request to another control unit, from among the control units, using the path, and the initiator in the other control unit accesses a target storage device from among the plurality of storage devices via its connection path.

2. The storage control unit according to claim 1, wherein, upon occurrence of a failure in access from a control unit from among the plurality of control units to the storage unit, the control unit sends the data input/output request to another control unit from among the plurality of control units via the path.

3. The storage control unit according to claim 2, wherein the controller in the control unit issues the data input/output request to the initiator in the other control unit via the path.

4. The storage control unit according to claim 2 or claim 3, further comprising control storage that stores a control table specifying a port address on the connection path for the control unit and a port address on the connection path for the other control unit for each of the storage devices.

5. The storage control unit according to claim 4, wherein the initiator accesses a storage device, from among the plurality of storage devices, matching the data input/output request according to the port address for the storage device in the control table.

6. The storage control unit according to claim 5, wherein the initiator in the other control unit, that has received the data input/output request from the controller in the control unit accesses a target storage device from among the plurality of storage devices that is determined by the port address for the target storage device on the initiator side.

7. The storage control unit according to any one of claims 4 to 6, wherein the controller that has received the data input/output request from the host system converts the port address for the target storage device on a connection path having a failure, from among the plurality of connection paths, to the port address for the target storage device on a connection path having no failure, from among the plurality of connection paths, and sends the converted address to the initiator that controls the connection path having no failure, and the initiator accesses the storage device that is the target for the data input/output request based on the converted address.

8. The storage control unit according to any one of claims 1 to 7, wherein the connection paths are Fibre Channel-Arbitrated Loops (FC-AL) each being a Fibre Channel loop.

9. The storage control unit according to any one of claims 1 to 8, wherein the controller, upon determining a failure as having occurred in its connection path, sends the data input/output request from the host to the initiator in the other control unit.

10. The storage control unit according to claim 2, or any claim dependent on claim 2, wherein the controller, upon detection of recovery from the failure, switches the transmission destination of the data input/output request from the host from the initiator in the other control unit having no failure, to the initiator in the control unit that has recovered from the failure.

11. The storage control unit according to claim 2, or any claim dependent on claim 2, wherein the controller, upon occurrence of an error in data input/output from/to the initiator to/from a target storage device from the plurality of the storage devices, has the initiator continue to attempt to access the target storage device for a specified number of times, and if the initiator cannot access the target storage device after the specified number of times, the controller determines that a failure has occurred.

12. A storage control unit comprising:
a storage unit including a plurality of storage devices;
a first control unit and a second control unit that perform data input/output processing for the storage unit in response to a data input/output request from a host, the first control unit including a first controller that performs the overall control of the data input/output processing, and a first initiator that performs control to access a storage device, from among the plurality of storage devices in the storage unit, that is the target for the data input/output request based on the data input/output request, the second control unit including a second controller that performs the overall control of the data input/output processing, and a second initiator that performs control to access a storage device, from among the plurality of storage devices in the storage unit, that is the target for the data input/output request based on the data input/output request, the first controller and the second controller being connected via a path that can send/receive control data;
a first connection path that connects the first control unit and the storage unit; and
a second connection path that connects the second control unit and the storage unit,
wherein the first controller in the first control unit, based on the data input/output request from the host system targeting the storage unit, issues the data input/output request to the second initiator in the second control unit using the path, and accesses the target storage device via the second connection path based on the data input/output request.

13. The storage control unit according to claim 12, wherein the first control unit, triggered by a failure occurring when the first initiator accesses the target storage device via the first connection path, issues the data input/output request from the host system to the second initiator via the path.

14. The storage control unit according to claim 13, wherein the first control unit, triggered by a failure occurring when the first initiator accesses the target storage device via the first connection path, issues the data input/output request from the host to the second controller via the path.

15. A storage control unit comprising two channels, each including:
a storage unit;
a control unit that performs data input/output processing for the storage unit in response to a data input/output request from a host; and
a connection path connecting the control unit and the storage unit,
wherein when a failure occurs in the connection path in one of the two channels and the data input/output request from the host is issued to the control unit in that failed channel, the control unit transfers the data input/output request to the control unit in the other channel and the control unit in the other channel accesses the storage unit via the connection path in the other channel.

16. The storage control unit according to claim 15, wherein the control unit in the one channel, triggered by the occurrence of an access failure when the control unit accesses the storage unit via the connection path in the channel, transfers the data input/output request from the host to the control unit in the other channel.

17. The storage control unit according to claim 16, wherein the storage unit includes a plurality of storage devices, and the connection path includes a switch circuit including a port switch connected to each of the storage devices, and the failure is a defect in the switch circuit.
